Europäisches Patentamt

European Patent Office

Office européen des brevets

(11) Publication number: **0 139 650**
**B1**

(12) **EUROPEAN PATENT SPECIFICATION**

(45) Date of publication of patent specification: **30.11.88**

(21) Application number: **83903385.9**

(22) Date of filing: **12.10.83**

(86) International application number:
**PCT/FI83/00063**

(87) International publication number:
**WO 84/01561 26.04.84 Gazette 84/11**

(51) Int. Cl.⁴: **B 65 G 67/02, B 65 G 1/00, B 65 G 65/00**

(54) **A METHOD AND APPARATUS FOR LOADING A STORAGE AND TRANSPORT RACK.**

(30) Priority: **12.10.82 FI 823467**

(43) Date of publication of application:
**08.05.85 Bulletin 85/19**

(45) Publication of the grant of the patent:
**30.11.88 Bulletin 88/48**

(84) Designated Contracting States:
**AT BE CH DE FR GB LI NL SE**

(56) References cited:
**DE-B-2 200 646**
**SE-B- 383 861**
**SE-B- 383 862**
**SE-B- 420 905**
**US-A-2 692 058**
**US-A-3 637 095**

(73) Proprietor: **VALPAK OY**
**Vanha valtatie 23**
**SF-04400 Järvenpää (FI)**

(72) Inventor: **BERGHÄLL, Christer, Karl-Olof**
**Hameentie 8**
**SF-04400 Jarvenpaa (FI)**
Inventor: **OLLIKAINEN, Jukka, Sakari**
**Ahvenkoskenpolku 5**
**SF-00950 Helsinki 95 (FI)**
Inventor: **KOSKIVAARA, Timo, Tapio**
**Kytotie 56**
**SF-04400 Jalvenpaa (FI)**
Inventor: **HILTUNEN, Mikko, Kalervo**
**Uudentuvantie 27 E 2**
**SF-00680 Helsinki 68 (FI)**

(74) Representative: **Bayliss, Geoffrey Cyril et al**
**BOULT, WADE & TENNANT 27 Furnival Street**
**London EC4A 1PQ (GB)**

Courier Press, Leamington Spa, England.

## Description

The present invention relates to a method for loading with several layers of goods a storage and transport rack, wherein goods which arrive on a conveyor are transferred during loading into a rack, for example a cart-rack, the rack being fixed to a predetermined station for the duration of the loading. The invention also relates to an apparatus for carrying out this method.

US—A—3637095 discloses a cart-loading machine having outside, intermediate and inner frames where multi-loading shelves are utilised to receive the containers at a single loading elevation. The loading shelves are positioned in a lowered position and raised as they are filled to elevated portions by telescoping pins. The filled multi-loading shelves are then automatically moved into a rollaway cart by movement of the intermediate and inner frames. When the containers are positioned over the cart storage shelves, the intermediate frame is then withdrawn, which includes the loading shelves. The inner frame which includes push rods, is held stationary with respect to the outer frame and the cart butt is moved forward with respect to the intermediate frame causing the containers to be removed from the loading shelves and dropped on the storage shelves of the cart.

It will be understood that such apparatus can only be utilised with cart/storage and transport racks with fixed shelves with separation of the shelves determined by the height of the layers of goods to be transferred thereto. If the transport rack is to be utilised efficiently, the shelf spacing must be adjustable to cater for layers of different height or different carts must be available with different shelf spacing to cater for goods/layers of different heights.

The invention consists of a method of loading a storage and transport rack of a predetermined station with several layers of goods, comprising the steps of: bringing in the goods in one layer on a conveyor, arranging next to said station an intermediate storage means having a plurality of horizontally movable plate-like members for supporting the layers respectively in said intermediate storage means, and transferring said plate-like members and the goods thereon in vertical direction into a formation corresponding to the formation of goods in the rack (as known from US—A—3637095); wherein the storage rack is a shelf-less rack and in that the plate-like members are pushed with goods thereon from the intermediate storage means in one push into the shelf-rack in staggered fashion so that the lowest layer is partially pushed into the rack first, and layers thereabove are pushed, staggered in succession, into a vertically aligned formation in the rack after which the plate-like members are withdrawn from the rack whilst the goods are restrained against moving with the plate-like members whereby the goods remain in the rack.

The invention also consists of an apparatus for loading a storage and transport rack with several layers of goods, comprising: a conveyor for bringing in the goods in one layer, a storage and transport rack for the goods, said rack being movable and lockable at a predetermined station for the loading of the goods, intermediate storage means arranged next to said station, and having horizontally movable plate-like members for supporting the respective layers of goods in said intermediate storage means, vertical transfer devices for transferring said plate-like members and the goods thereon in vertical directions into a formation corresponding to the required formation of goods in the rack (as known from US—A—3637095); wherein the rack is a shelf-less rack, and that a multiple-layer pushing device is arranged next to said intermediate storage means for pushing the goods/plate-like members from the intermediate storage means into said shelf-less rack, said pushing device comprising separate, vertically spaced pushers for acting on the respective plate-like members carrying said layers of goods to displace the members into the rack and then withdraw the members, and means for moving said pushers in staggered fashion so that each pusher is moved in succession ahead of the pusher above but to the same final extent, to move thereby the goods/plate-like members into a vertically aligned formation in the shelf-less rack, and stops to hold the goods in the rack as the plate-like members are withdrawn from the rack.

The following is a specific description of one embodiment of the invention reference being made to the accompanying drawings, in which:

Figure 1 depicts a simplified side view of an apparatus to which the invention relates but not embodying the invention itself,

Figure 2 depicts the same apparatus in section A—A of Figure 1,

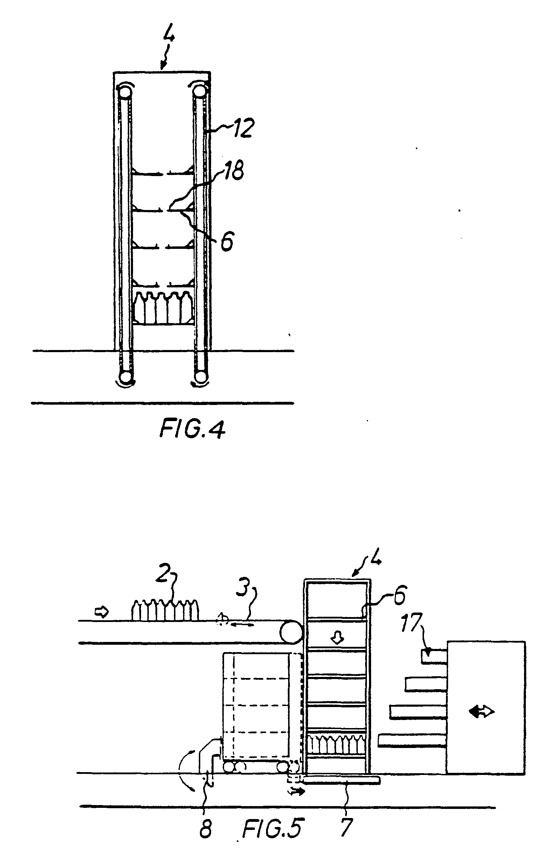

Figure 3 depicts section B—B of the intermediate storage apparatus seen in Figures 2 and 4,

Figure 4 depicts an intermediate storage apparatus for goods which are not in package, and

Figure 5 depicts the loading stage for such goods by an apparatus embodying the invention.

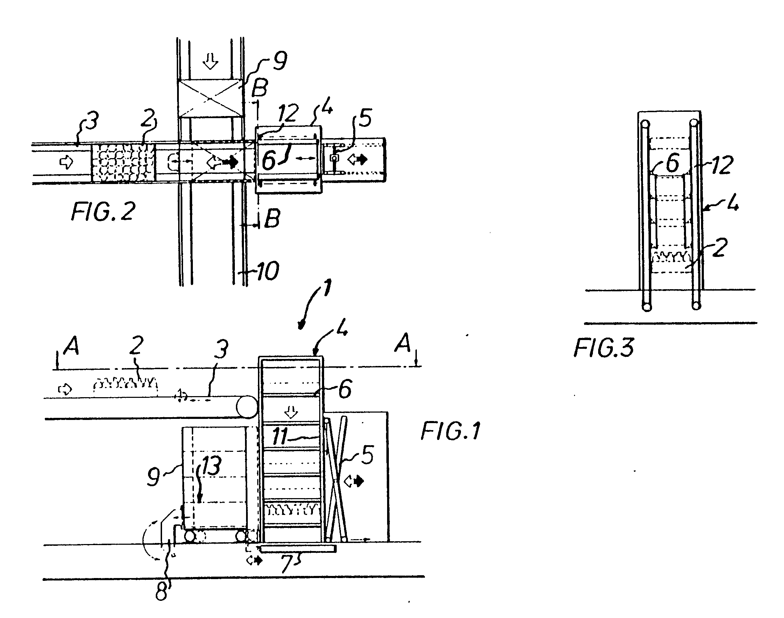

Figures 1 to 3 depict an apparatus 1 in which the goods to be loaded, in this case bottles 2 packed into a group, arrive at the loading site on a conveyor 3. The cart-racks 9 to be loaded arrive at the site on a conveyor 10 and stop at the loading place. In the immediate vicinity of the conveyor 3 there is an intermediate storage 4, and those edges of it which are parallel to the travel direction of the conveyor 3 have endless conveyor chains 12, which serve as lifting/lowering devices and in which there are fitted at even intervals plates 6 which serve as means for receiving the package of goods. There are plates 6 with conveyor chains 12 on both sides of the intermediate storage 4, their movements being, of course, mutually synchronized, in order that the package remains in a substantially horizontal position throughout the operation.

The packages coming from the conveyor 3 are transferred into the intermediate storage 4 in such a way that each pair of plates 6 receives its own package of goods. At this time the chains move downwards in sequences in such a way that each of the spaces between the plates seen in Figure 1 has a package of goods, the distance between the plates corresponding to the distance between the shelves in the cart-rack 9.

The cart-rack is waiting for its load next to the intermediate storage 4, and the pushing device 5 carries out a reciprocating movement and pushes, by means of its pusher 11, in this case four packages 2 one on top of the other onto the shelves 13 respectively spaced in the rack. This transfer has been preceded by a transfer of the rack 9 by members 8 to immediately next to the intermediate storage 4. During the transfer the member 8 supports the cart-rack 9 so that it cannot move when the force of the push affects it. The entire transfer of the packages into the rack takes only the time that it takes for the next package to be transferred to the top space in the intermediate storage 4. Thereafter the cart-rack can be moved away and be replaced with the next rack 9, which arrives on the conveyor 10 while the intermediate storage 4 is being filled.

It should be understood that the conveyor 10 can curve in any direction, in which case the angle between an arriving conveyor section and a departing section can be 0° (as shown in Figure 2), 90° or 180°.

Figure 3 depicts cross section B—B of the lifting and lowering device 4. The figure clearly shows the placement of the chains 12 or respective devices in the apparatus and the location of the plates 6 in the chains 12.

Pushing device 5 can be pneumatic, hydraulic or, for example, an electromechanical device, for any known operating method is sufficient, since reliability in operation is nearly the only criterion in the selection of the operating method. Sufficient speed is achieved by any operating method. The mutual location of the parts of the apparatus can be different from that presented by way of example in the figures.

The apparatus is highly suitable for use also in such a way that the goods, such as cartons or bottles, are not packed in packages, but they arrive on conveyor 3 separate, in a so-called "loose package". Such a "loose package" thus otherwise fully corresponds to the quantity of goods packed in a box, but there is no package around the goods. In such a case the plates 6 of the lifting and lowering device are designed so that they form a substantially level surface for the goods. Thus the plates 6 have been widened in such a way that the plates 6 extend on both sides of the device 4 substantially half way into the device 4. In other respects the apparatus fully corresponds to the apparatus described above.

The apparatus described above is intended for use with a cart-rack 9 equipped with shelves onto which the packages of goods or the goods are transferred in layers. In accordance with the present invention, a rack without shelves may be used. The goods to be stacked in the cart-rack 9 must in such a case be capable of being stacked one above the other, i.e. they must be of such a kind that the upper surface of each layer of goods can serve as the receiving surface of each layer of goods can serve as the receiving surface of the next layer of goods in the event that a "loose package" is used. If there are no shelves, the plates 6 of the intermediate storage 4 are used for transferring the goods from the intermediate storage 4 into the rack 9. Such an arrangement is shown in Figure 5. The plates 6 extend on both sides substantially so as to come into contact with each other, and the "loose package" made up of the goods, supported by the plates 6, is transferred into a cart-rack, whereafter a stop on the intermediate storage 4 side holds the goods in place while the plates 6 are being drawn back.

When an embodiment is used in which the plates 6 of the intermediate storage can be transferred into the rack and away from it, and thus the transfer is by means of plates 6 into a rack without shelves, the transfer is staggered, in accordance with the present invention so that the package or separate goods of one layer to be transferred into the rack has a receiving base ready at least in part before the next layer commences to be transferred into place. Such staggering is shown in Figure 5. In it the lowest plates 6 are carrying out their transfer movement with the aid of pushers 17 somewhat ahead of the next plate pair 6, which again carries out its movement slightly ahead of the next one, etc. The difference between the stages need not be great, but should be great enough for a suitable receiving base to have been formed at each given time for the next layer of goods.

By using the above described method and apparatus it has been possible to make both operations continuous. There will be no stoppages, and so the loading and unloading of cart-racks or similar storage and transport racks is rapid as compared with previous methods, which is an absolute requirement in modern industry. Since the capacity of the apparatus is considerably higher than that of known apparatus, it is possible with the aid of the apparatus according to the invention to achieve savings also in acquisitions of apparatus, since the total number of apparatus units per factory unit can be decreased.

## Claims

1. A method of loading a storage and transport rack of a predetermined station with several layers of goods, comprising the steps of: bringing in the goods in one layer on a conveyor (3), arranging next to said station an intermediate storage means (4) having a plurality of horizontally movable plate-like members (6) for supporting the layers respectively in said intermediate storage means, and transferring said plate-like members and the goods thereon in vertical direction into a formation corresponding to the formation of goods in the rack; characterised in that the storage rack is a shelf-less rack (9) and in that the plate-like members (6) are pushed with goods thereon from the intermediate storage means in one push into the shelf-less rack (9) in staggered fashion so that the lowest layer is partially pushed into the rack (9) first, and layers thereabove are pushed, staggered in succession, into a vertically aligned formation in the rack (9) after which the plate-like members (6) are withdrawn from the rack (9) whilst the goods are restrained against moving with the plate-like members (6) whereby the goods remain in the rack (9).

2. An apparatus for loading a storage and transport rack with several layers of goods, comprising: a conveyor (3) for bringing in the goods in one layer, a storage and transport rack (9) for the goods, said rack being movable and lockable at a predetermined station for the loading of the goods, intermediate storage means (4) arranged next to said station, and having horizontally movable plate-like members (6) for supporting the respective layers of goods in said intermediate storage means, vertical transfer devices (12) for transferring said plate-like members and the goods thereon in vertical directions into a formation corresponding to the required formation of goods in the rack; characterised in that the rack (9) is a shelf-less rack, and that a multiple-layer pushing device (5) is arranged next to said intermediate storage means (4) for pushing the goods/ plate-like members from the intermediate storage means into said shelf-less rack (9), said pushing device comprising separate, vertically spaced pushers (17) for acting on the respective plate-like members carrying said layers of goods to displace the members into the rack and then withdraw the members, and means for moving said pushers (17) in staggered fashion so that each pusher is moved in succession ahead of the pusher above but to the same final extent, to move thereby the goods/plate-like members into a vertically aligned formation in the shelf-less rack, and stops to hold the goods in the rack as the plate-like members are withdrawn from the rack.

**Patentansprüche**

1. Verfahren zum Laden eines Lager- oder Transportregals einer vorbestimmten Station mit mehreren Lagen von Waren, beinhaltend folgende Schritte: Das Einbringen der Waren in einer Lage auf einen Förderer (3), das Anordnen eines Zwischenspeichermittels (4) nächst der genannten Station, welches eine Mehrzahl von horizontal bewegbaren plattenähnlichen Gliedern (6) für das Tragen der jeweiligen Lagen in dem genannten Zwischenspeichermittel hat, das Transferieren der genannten plattenähnlichen Glieder und der Waren darauf in vertikaler Richtung in eine Formation entsprechend der Formation der Waren in dem Regal, dadurch gekennzeichnet, daß das Speicherregal ein fachbodenloses Regal (9) ist und daß die plattenähnlichen Glieder (6) mit den Waren darauf von dem Zwischenspeichermittel vorgetrieben werden in einem Schub in der Weise versetzt, daß die unterste Lage teilweise zuerst in das Regal (9) vorgetrieben wird und die darüber befindlichen Lagen, in Aufeinanderfolge versetzt, in eine vertikal ausgerichtete Formation in das Regal (9) vorgetrieben werden, wonach die plattenähnlichen Glieder (6) aus dem Regal (9) zurückgezogen werden, während die Waren daran gehindert werden, sich mit den plattenähnlichen Gliedern (6) zu bewegen, wodurch die Waren in dem Regal (9) verbleiben.

2. Vorrichtung zum Laden eines Lager- und Transportregales mit mehreren Lagen von Waren, beinhaltend einen Förderer (3) zum Einbringen der Waren in einer Lage, ein Lager- und Transportregal (9) für die Waren, welches Regal an eine vorbestimmte Station bewegbar und dort für das Beladen mit den Waren festsetzbar ist, Zwischenspeichermittel (4) angeordnet nächst der genannten Station und mit horizontal beweglichen plattenähnlichen Gliedern (6) zum Tragen der jeweiligen Lagen der Waren in dem genannten Zwischenspeichermittel, Vertikal-Transfer-Vorrichtungen (12) zum Transferieren der genannten plattenähnlichen Glieder und der Waren darauf in vertikalen Richtungen in eine Formation entsprechend der gewünschten Formation der Waren im Regal, dadurch gekennzeichnet, daß das Regal (6) ein fachbodenloses Regal ist und daß eine Mehrlagen-Vortriebseinrichtung (5) nächst der genannten Zwischenspeichermittel (4) angeordnet ist, um die Waren/ plattengleichen Glieder von den Zwischenspeichermitteln in das genannte fachbodenlose Regal (9) vorzutreiben, wobei die genannte Vortriebseinrichtung separate, vertikal abständige Stößel (17) für das Einwirken auf die jeweiligen plattenähnlichen Glieder, die die genannten Lagen von Waren tragen, aufweist, um die Glieder in das Regal zu verlagern und dann die Glieder zurückzuziehen, sowie ferner Mittel zum Bewegen der genannten Stößel (17) in versetzter Weise derart, daß jeder Stößel in Aufeinanderfolge in Vorlauf vor dem darüber liegenden Stößel bewegt wird, aber mit dem gleichen Endhub, um dadurch die Waren/plattenähnlichen Glieder in eine vertikal ausgerichtete Formation in das fachbodenlose Regal zu bewegen und ferner Anschläge vorgesehen sind, um die Waren im Regal zu halten, wenn die plattenähnlichen Glieder aus dem Regal zurückgezogen werden.

**Revendications**

1. Procédé de chargement d'un casier de stockage et de transport à un poste prédéterminé avec plusieurs couches de produits, comprenant les étapes consistant à: amener les produits en une couche sur un convoyeur (3), disposer à côté dudit poste un moyen de stockage intermédiaire (4) possédant une pluralité d'éléments horizontaux mobiles analogues à des plateaux (6) pour supporter les couches respective dans ledit moyen de stockage intermédiaire et transférer lesdits éléments analogues à des plateaux et les produits disposés sur eux dans le sens vertical en une formation correspondant à la formation des produits dans le casier, caractérisé par le fait que le casier de stockage est un casier sans tablette (9) et que les éléments analogues à des plateaux (6) sont poussés avec les produits sur eux depuis le moyen de stockage intermédiaire en une poussée dans le casier sans tablette (9) de manière décalée de façon que la couche la plus basse soit partiellement poussée dans le casier (9) la première, et que les couches disposées au-dessus soient poussées de manière successivement décalée en une formation alignée verticalement dans le casier (9), après quoi les éléments analogues des plateaux (6) sont retirés de du casier (9) alors que les produits sont empêchés de se déplacer avec les éléments analogues à des plateaux (6), les produits restant ainsi dans le casier (9).

2. Dispositif de chargement d'un casier de stockage et de transport avec plusieurs couches de produits, comportant: un convoyeur pour amener les produits en une couche, un casier de stockage et de transport (9) pour les produits, ledit casier étant mobile et verrouillable à un poste prédéterminé pour le chargement des produits, un moyen de stockage intermédiaire (4) disposé à côté dudit poste et possédant des éléments analogues à des plateaux (6) mobiles horizontalement pour supporter les couches respectives de produits dans ledit moyen de stockage intermédiaire, des dispositifs de transfert vertical (12) pour transférer lesdits éléments en forme de plateaux et les produits sur eux dans des directions verticales en une formation correspondant à la formation requise des produits dans le casier, caractérisé par le fait que le casier (9) est un casier sans tablette et qu'un dispositif pousseur en plusieurs couches (5) est disposé à côté dudit moyen de stockage intermédiaire pour pousser les produits/éléments analogues à des plateaux du moyen de stockage intermédiaire dans ledit casier sans tablette (9), ledit dispositif pousseur comportant des poussoirs séparés, espacés verticalement (17), pour agir sur les éléments analogues à des plateaux respectifs portant lesdites couches de produits pour déplacer les éléments dans le casier et ensuite retirer les éléments, et des moyens pour déplacer lesdits poussoirs (17) de manière décalée de façon que chaque poussoir soit successivement déplacé avant le poussoir disposé au-dessus mais d'une même distance finale pour ainsi déplacer les produits/éléments analogues à des plateaux en une formation alignée verticalement dans le casier sans tablette, et des butées pour maintenir les produits dans le casier lorsque les éléments analogues à des plateaux sont retirés du casier.

FIG.3

FIG.1

FIG.2

FIG.4

8    FIG.5    7

2